# EUROPÄISCHE PATENTSCHRIFT

(11) **EP 0 676 317 B1**
(45) Veröffentlichungstag und Bekanntmachung des Hinweises auf die Patenterteilung: **18.06.1997**
(21) Anmeldenummer: 95102574.1
(22) Anmeldetag: 23.02.1995
(51) Int. Cl.: B60R 21/13, B60J 7/12

(54) **Personenkraftwagen, insbesondere Cabriolet**
Passenger car, in particular convertible
Voiture de tourisme, en particulier cabriolet

(30) Priorität: 08.04.1994 DE 4412109
(43) Veröffentlichungstag der Anmeldung: 11.10.1995
(73) Patentinhaber: Dr.Ing.h.c. F. Porsche Aktiengesellschaft, 70435 Stuttgart (DE)
(72) Erfinder: Henn, Uwe, D-71299 Wimsheim (DE); Pfertner, Kurt, D-71299 Ditzingen (DE); Aydt, Matthias, D-71735 Eberdingen (DE); Zepnik, Siegfried, D-75223 Niefern-Öschelbronn (DE)

(56) Entgegenhaltungen:
- EP-A- 0 454 279
- FR-A- 1 539 482
- FR-A- 2 601 906
- US-A- 5 018 780

## Beschreibung

Die Erfindung betrifft einen Personenkraftwagen, insbesondere ein Cabriolet, mit einem Verdeck und einer Überrollschutzvorrichtung.

Aus dem DE-GM 85 23 831 geht ein Cabriolet mit einem klappbaren Verdeck und einer hinter den vorderen Sitzen angeordneten Überrollschutzvorrichtung hervor, wobei die Überrollschutzvorrichtung durch einen feststehenden, am Fahrzeugboden befestigten Überrollbügel gebildet wird.

Das Verdeck und die Überrollschutzvorrichtung werden bei der Serienfertigung getrennt voneinander am Aufbau befestigt. Insbesondere zur aufbauseitigen Anlenkung des Verdecks ist es erforderlich am Rohbau entsprechende Versteifungsmaßnahmen vorzusehen, was sich kosten- und gewichtserhöhend auswirkt.

Aufgabe der Erfindung ist es, an einem Cabriolet mit einem Verdeck und einer Überrollschutzvorrichtung solche Vorkehrungen zu treffen, daß bei funktionsgerechter Befestigung die Montage vom Verdeck und der Überrollschutzvorrichtung am Fahrzeug vereinfacht und die Montagezeit am Band verringert wird.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Zusammenfassung von Überrollschutzvorrichtung und Verdeck zu einer vorgefertigten Baueinheit die Montage am Fahrzeug wesentlich erleichtert wird. Die durch einen Überrollbügel dargestellte Überrollschutzvorrichtung ist relativ verwindungssteif ausgebildet und stellt somit eine stabile Basis für das Verdecklager dar.

Rohbauseitige Versteifungsmaßnahmen im Bereich des Verdecklagers können entfallen, was sich gewichts- und kostensenkend auswirkt.

Ferner ist vorgesehen, daß Befestigungs- und Umlenkpunkte einer Sicherheitsgurtanordnung ebenfalls in die vorgefertigte Baueinheit integriert sind. Somit können im Bereich der Gürtellinie vorgesehene nach oben vorstehende Höcker für den oberen Gurtumlenkpunkt an der Karosserie entfallen.

Die oberen Umlenkpunkte können ohne rohbauseitigen Aufwand relativ hoch liegend am Überrollbügel angeordnet werden und nehmen somit eine optimale Lage, bezogen auf die Insassensicherheit ein. An einem vorderen Rahmenteil des Überrollbügels ist ein Gurtroller und eventuell ein Gurtstraffer der Sicherheitsgurtanordnung angebracht.

Ein Ausführungsbeispiel der Erfindung ist in der Zeichnung dargestellt und wird im folgenden näher erläutert.
Es zeigt
- Fig.1: eine perspektivische Ansicht von schräg vorne auf eine aus einem Überrollbügel und einem Verdeck bestehende vorgefertigte Baueinheit
- Fig. 2: die Bauteile der Baueinheit in Explosionsdarstellung
- Fig. 3: einen Schnitt nach der Linie III-III der Fig. 1 in größerem Maßstab
- Fig. 4: einen Schnitt nach der Linie IV-IV der Fig. 1 in größerem Maßstab
- Fig. 5: einen Schnitt nach der Linie V-V der Fig. 1 in größerem Maßstab
- Fig. 6: einen Schnitt nach der Linie VI-VI der Fig. 1 in größerem Maßstab

Ein durch ein nicht näher dargestelltes zweisitziges Cabriolet gebildeter offener Personenkraftwagen weist ein Verdeck 1 und eine Überrollschutzvorrichtung 2 auf.

Das klappbare Verdeck 1 setzt sich aus einem Verdeckgestänge 3 und einem mit diesem verbundenen elastischen Verdeckbezug 4 zuzsammen, wobei das Verdeckgestänge 3 an zwei seitlich außenliegenden Verdecklagern 5 drehbar gelagert ist. Im hinteren Bereich des Verdeckbezuges 4 ist eine Heckscheibe 6 vorgesehen, die starr oder flexibel ausgebildet sein kann.

In einer Schließstellung A erstreckt sich das Verdeck 1 zwischen einem nicht gezeigten Windschutzrahmen und einem Heckbereich 7 des Personenkraftwagens und überdeckt einen Fahrgastraum 8, wobei das Verdeck 1 über nicht näher dargestellte Verschlüsse am Windschutzrahmen lösbar in Lage gehalten ist. In der zusammengeklappten Stellung wird das Verdeck 1 nach hinten in den Heckbereich verschwenkt und liegt entweder auf dem Heckbereich auf oder ist in einem Verdeckkkasten aufgenommen, der mittels eines Verdeckkastendeckels nach oben hin abgedeckt ist. Hinter den beiden nicht dargestellten vorderen Sitzen des Personenkraftwagens ist die Überrollschutzvorrichtung 2 vorgesehen, die im Ausführungsbeispiel durch einen feststehenden, starren Überrollbügel 12 gebildet wird. Der Überrollbügel 12 ist aus mehreren rohrförmigen Rahmenteilen aus Stahl oder Leichtmetall zusammengesetzt und an seitlich außenliegenden unteren Enden 9,10 unter Zwischenschaltung von Montageplatten 11, 11' am feststehenden Aufbau befestigt. Dies kann durch Schrauben, Schweißen oder dgl. erfolgen.

Der Überrollbügel 12 umfaßt an seinen beiden Längsseiten jeweils aufrecht verlaufende vordere Stützabschnitte 13 und hintere Stützabschnitte 14 sowie zwei sich in Querrichtung erstreckende bügelförmige Abschnitte 15, die durch einen horizontal verlaufenden Verbindungsbereich 16 aneinander angeschlossen sind.

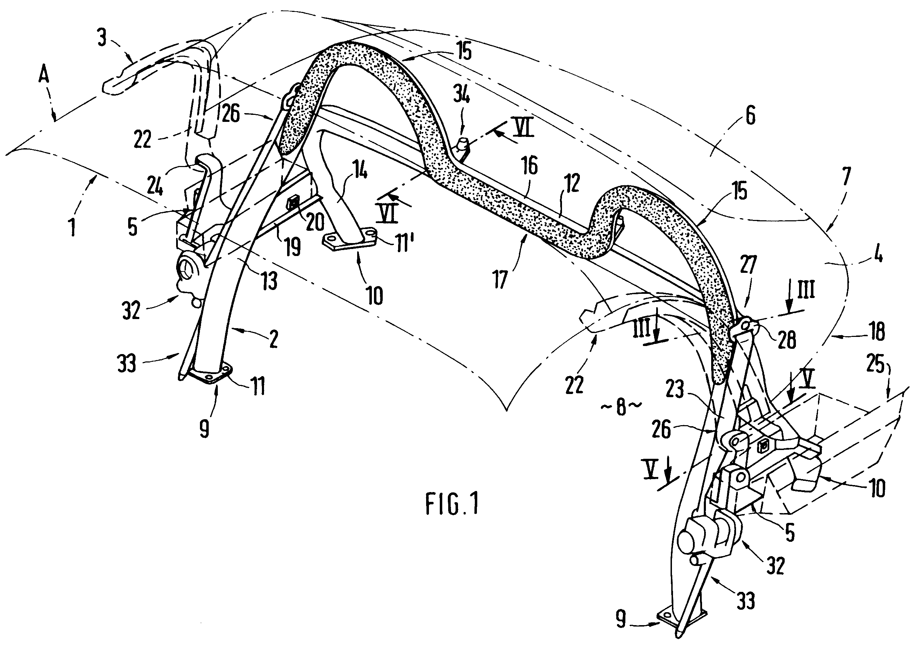

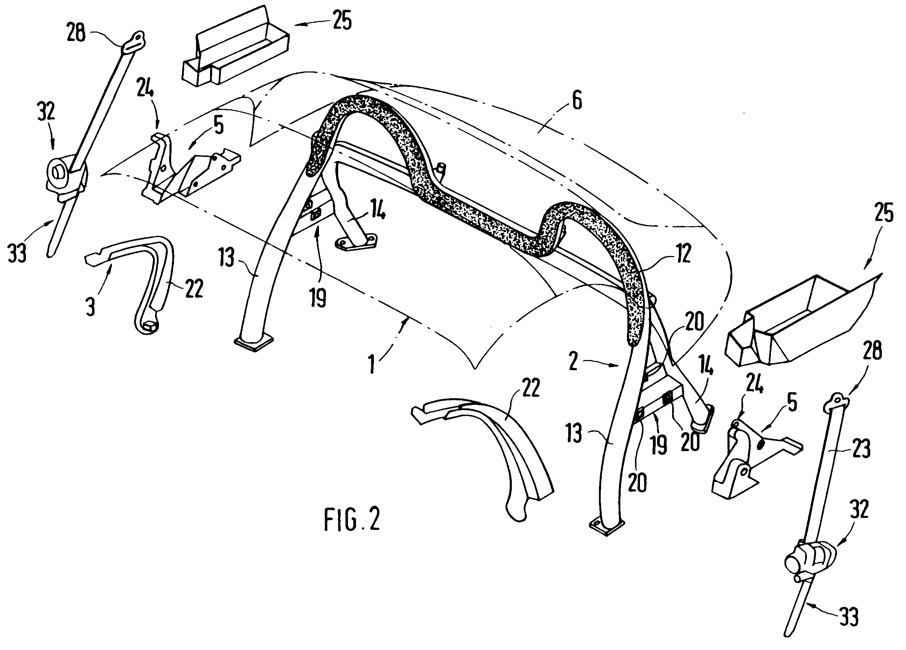

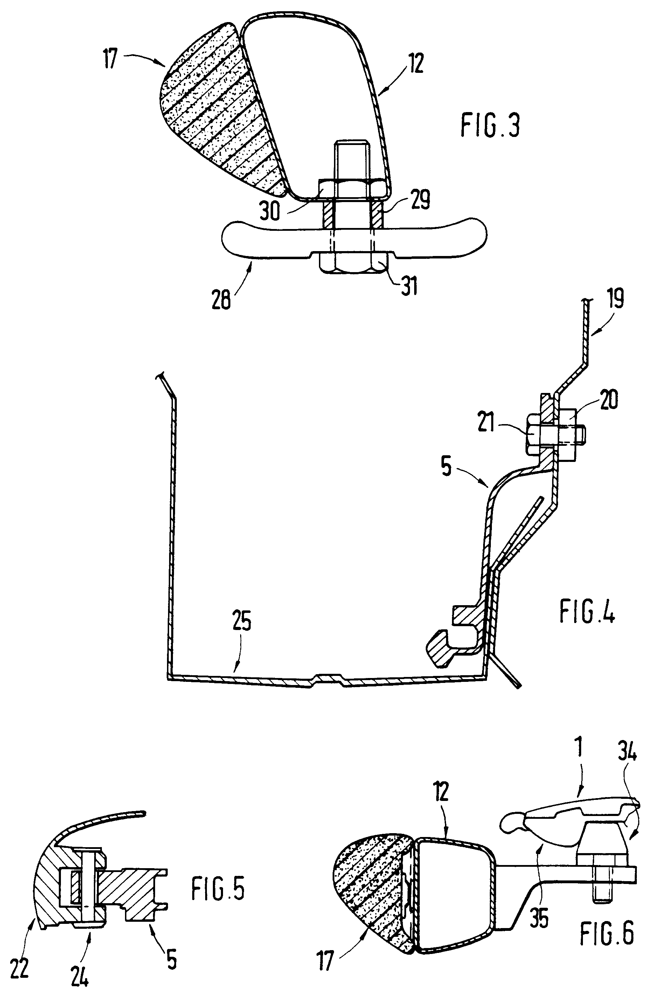

Gemäß den Fig. 1 und 3 ist der Überrollbügel 12 auf der den Insassen zugekehrten Seite abschnittsweise mit einer Polsterung 17 versehen. Erfindungsgemäß ist vorgesehen, daß die Überrollschutzvorrichtung 2 und das Verdeck 1 außerhalb des Fahrzeuges zu einer vormontiereten Baueinheit 18 zusammengefasst sind.

Der Überrollbügel 12 weist an jeder Längsseite zwischen dem vorderen aufrechten Stützabschnitt 13 und dem hinteren aufrechten Stützabschnitt 14 eine den Überrollbügel 12 versteifende, sich in Fahrzeuglängsrichtung erstreckende Konsole 19 auf, an der das Verdecklager 5 des Verdecks 1 befestigt ist.

Hierzu sind an der Konsole 19 örtlich Schweißmuttern 20, Durchzüge oder dgl. vorgesehen, in die Befestigungsschrauben 21 eingedreht sind.

Der Überrollbügel 12 ist relativ verwindungssteif ausgebildet und stellt somit eine stabile Basis zur Halterung des Verdecks 1 dar.

Vom Verdeckgestänge 3 sind in Fig. 1 lediglich B-Säulenlenker 22 dargestellt, die am Verdecklager 5 bei 24 drehbar angelenkt sind. Das Verdeckgestänge 3 kann jede beliebige Form aufweisen. Zwischen der Konsole 19 und dem Verdecklager 5 ist jeweils ein nach oben offener Wasserkasten 25 eingeklemmt und in Lage gehalten.

Zur Sicherung der auf den vorderen Sitzen platznehmenden Insassen ist eine Sicherheitsgurtanordnung 26 vorgesehen, die durch zwei getrennt voneinander angeordnete 3-Punkt-Sicherheitsgurte gebildet wird.

Die 3-Punkt-Sicherheitsgurte können entweder direkt am Sitz angeordnet sein oder gemäß einer weiteren Ausführungsform der Erfindung zumindest teilweise in die vorgefertigte Baueinheit 18 integriert sein.

Gemäß den Fig. 1 und 3 ist in einen oberen seitlich außenliegenden Bereich 27 eines bügelfögmigen Abschnitts 15 des Überrollbügels 12 jeweils ein schwenkbarer Umlenkbeschlag 28 der Sicherheitsgurtanordnung 26 angeordnet, wobei der Umlenkschlag 28 einen oberen Gurtumlenkpunkt bildet.

Der Umlenkbeschlag 28 ist unter Zwischenschaltung eines Distanzstückes 29 am Überrollbügel 12 befestigt. Hierzu ist am Überrollbügel 12 eine Gewindebohrung oder eine Schweißmutter 30 vorgesehen, in die eine Befestigungsschraube 31 eingedreht ist. Ferner sind am Überrollbügel 12 die unterliegenden Gurtaufroller 32 der Sicherheitsgurtanordnung 26 in Lage gehalten, und zwar am vorderen aufrechten Stützabschnitt 13 unterhalb der Konsole 19. Der Umlenkbeschlag 28 kann auch auf der zur Fahrzeugmitte hin orientierten Seite des bügelförmigen Abschnitts 15 befestigt sein, die Gurtaufroller 32 am querverlaufenden Verbindungsbereich 16.

Im Ausführungsbeispiel weisen die Gurtaufroller 32 jeweils einen integrierten Gurtstraffer 33 auf.

Bei angelegtem Sicherheitsgurt erstreckt sich das Gurtband 23 vom untenliegenden Gurtaufroller 32 zum obenliegenden Umlenkbeschlag 28 und wird dann über die Schulter des Insassen schräg nach unten und innen in Richtung Fahrzeuglängsmittelebene geführt und ist dort in einem nicht näher dargestellten unteren Gurtbefestigungspunkt lösbar in Lage gehalten.

An einem oberen querverlaufenden Verbindungsbereich 16 des Überrollbügels 12 ist auf der den Insassen abgekehrten Seite örtlich eine Fixiereinrichtung 34 vorgesehen, die bei zurückgeklapptem Verdeck 1 mit einem vorderen querverlaufenden Rahmenteil 35 des Verdecks 1 zusammenwirkt und das Verdeck 1 in dieser Stellung hält.

Ferner kann der Überrollbügel 12 etwa in Höhe der Befestigung des Gurtaufrollers 32 eine zweite Querverbindung aufweisen, die die beiden vorderen Stützabschnitte 13 miteinander verbindet. Diese nicht näher dargestellte Querverbindung dient als Crashstütze bzw. Querversteifung bei einem Seitenaufprall, um einen möglichst großen Überlebensraum sicherzustellen.

Am vorderen Stützabschnitt 13 des Überrollbügels 12 kann auch ein Seitenairbag befestigt werden.

Darüber hinaus ist denkbar, daß am querverlaufenden Verbindungsbereich (16) ein nicht näher dargestelltes Windschott anbringbar ist. Das Windschott kann beispielsweise über eine Steckverbindung am querverlaufenden Verbindungsbereich befestigt sein. Das Windschott kann auch ähnlich einem Rollo ausgebildet sein, wobei der Rollokasten mit Drehachse am querverlaufenden Verbindungsbereich festlegbar ist.

## Patentansprüche

1. Personenkraftwagen, insbesondere Cabriolet, mit einem Verdeck und einer Überrollschutzvorrichtung, **dadurch gekennzeichnet,** daß die Überrollschutzvorrichtung (2) und das Verdeck (1) zu einer vormontierten, außerhalb des Fahrzeuges hergestellten Baueinheit (18) zusammengefasst sind.

2. Personenkraftwagen nach Anspruch 1, **dadurch gekennzeichnet,** daß die Überrollschutzvorrichtung (2) durch einen feststehenden Überrollbügel (12) gebildet wird, der an seitlich außenliegenden unteren Enden (9,10) unter Zwischenschaltung von Montageplatten (11,11') am feststehenden Aufbau befestigt ist.

3. Personenkraftwagen nach den Ansprüchen 1 und 2, **dadurch gekennzeichnet,** daß der Überrollbügel (12) an jeder Längsseite zwischen einem vorderen Stützabschnitt (13) und einem hinteren Stützabschnitt (14) eine den Überrollbügel (12) versteifende, sich in Längsrichtung erstreckende Konsole (19) aufweist, an der ein Verdecklager (5) eines aus einem Verdeckgestänge (13) und einem elastischen Verdeckbezug (4) gebildeten klappbaren Verdecks (1) befestigt ist.

4. Personenkraftwagen nach Anspruch 1, **dadurch gekennzeichnet,** daß die vormontierte Baueinheit (18) ferner eine Sicherheitsgurtanordnung (26) umfasst.

5. Personenkraftwagen nach den Ansprüchen 1 bis 4, **dadurch gekennzeichnet,** daß in oberen, seitlich außenliegenden oder innenliegenden Bereichen (27) von bügelförmigen Abschnitten (15) des Überrollbügels (12) jeweils ein schwenkbarer oberer Umlenkbeschlag (28) der Sicherheitgurtanordnung (26) drehbar gelagert ist.

6. Personenkraftwagen nach den Ansprüchen 1 bis 5, **dadurch gekennzeichnet,** daß an beiden vorderen Stützabschnitten (13) oder an einem querverlaufenden Verbindungsbereich (16) des Überrollbügels (12) jeweils ein Gurtaufroller (32) der Sicherheitsgurtanordnung (26) befestigt sind.

7. Personenkraftwagen nach einem oder mehreren der vorangegangenan Ansprüche, **dadurch gekennzeichnet,** daß an einem horizontal ausgerichteten, querverlaufenden Verbindungsbereich (16) des Überrollbügels (12) auf der den Insassen abgewandten Seite eine Fixiereinrichtung (34) für das zurückgeschwenkte Verdeck (5) vorgesehen ist.

8. Personenkraftwagen nach einem oder mehren der vorangegangenen Ansprüche, **dadurch gekennzeichnet,** daß der Überrollbügel (12) etwa in Höhe der Befestigung der Gurtaufroller (32) eine zweite rohrförmige Querverbindung aufweist, die die beiden vorderen Stützabschnitte (13) miteinander verbindet.

9. Personenkraftwagen nach einem oder mehreren der vorangegangenen Ansprüche**, dadurch gekennzeichnet,** daß am vorderen Stützabschnitt (13) ein Seitenairbag befestigtbar ist.

10. Personenkraftwagen nach einem oder mehreren der vorangegangenen Ansprüche, **dadurch gekennzeichnet,** daß am querverlaufenden Verbindungsbereich (16) des Überrollbügels (12) ein Windschott anbringbar ist.

## Claims

1. A passenger car, in particular a cabriolet, with a top and a roll-over-protection device, **characterized in that** the roll-over-protection device (2) and the top (1) are combined to form a pre-assembled structural unit (18) produced separately from the vehicle.

2. A passenger car according to Claim 1, **characterized in that** the roll-over-protection device (2) is formed by a stationary roll-over bar (12) secured to the stationary body at lower ends (9, 10) laterally on the outside with the interposition of mounting plates (11, 11').

3. A passenger car according to Claims 1 and 2, **characterized in that** the roll-over bar (12) is provided on each longitudinal side - between a front support portion (13) and a rear support portion (14) - with a bracket (19) which reinforces the roll-over bar (12) and extends in the longitudinal direction and to which is secured a bearing (5) of a folding top (1) formed by a linkage (13) and a resilient covering (4).

4. A passenger car according to Claim 1, **characterized in that** the pre-assembled structural unit (18) further comprises a seat-belt arrangement (26).

5. A passenger car according to Claims 1 to 4, **characterized in that** one pivotable upper sash-guide device (28) of the seat-belt arrangement (26) is mounted rotatably in each of the upper regions (27) - lying laterally on the outside or inside - of yoke-shaped portions (15) of the roll-over bar (12).

6. A passenger car according to Claims 1 to 5**, characterized in that** one belt retractor (32) of the seat-belt arrangement (26) is secured on each of the two front support portions (13) or on a transversely extending connecting area (16) of the roll-over bar (12).

7. A passenger car according to one or more of the preceding Claims, **characterized in that** on a horizontally orientated, transversely extending connecting area (16) of the roll-over bar (12) a fixing device (34) for the swung-back top (5) is provided on the side remote from the occupants.

8. A passenger car according to one or more of the preceding Claims, **characterized in that** substantially at the level of the fastening of the belt retractor (32) the roll-over bar (12) has a second tubular transverse connexion which connects the two front support portions (13) to each other.

9. A passenger car according to one or more of the preceding Claims, **characterized in that** a side airbag can be fastened to the front support portion (13).

10. A passenger car according to one or more of the preceding Claims, **characterized in that** a windbreak can be attached to the transversely extending connecting area (16) of the roll-over bar (12).

## Revendications

1. Voiture de tourisme, en particulier cabriolet, comportant une capote et un dispositif de protection au retournement, caractérisée en ce que le dispositif de protection au retournement (2) et la capote (1) sont réunis en une unité de construction (18) prémontée, réalisée à l'extérieur du véhicule.

2. Voiture de tourisme selon la revendication 1, caractérisée en ce que le dispositif de protection au retournement (2) est formé par un arceau de retournement (2) fixe, qui est fixé sur la carrosserie fixe, à des extrémités inférieures (9, 10) situées latéralement à l'extérieur, par insertion de plaques de montage (11, 11').

3. Voiture de tourisme selon les revendications 1 et 2, caractérisée en ce que l'arceau de retournement (12) présente, sur chaque côté longitudinal, entre une portion d'appui avant (13) et une portion d'appui arrière (14), une console (19) s'étendant dans la direction longitudinale, renforçant l'arceau de retournement (12), sur laquelle est fixé un palier (5) d'une capote (1) rabattable, formée par une tringlerie de capote (13) et un revêtement de capote (4) élastique.

4. Voiture de tourisme selon la revendication 1, caractérisée en ce que l'unité de construction (18) prémontée comporte en outre un dispositif à ceinture de sécurité (26).

5. Voiture de tourisme selon les revendications 1 à 4, caractérisée en ce que dans chacune des zones (27) supérieures, situées latéralement à l'extérieur ou à l'intérieur de portions (15) en forme d'étriers de l'arceau de retournement (12), est montée tournante une ferrure de renvoi (28) supérieure, pivotante, du dispositif à ceinture de sécurité (26).

6. Voiture de tourisme selon les revendications 1 à 5, caractérisée en ce que dans chacune des deux portions d'appui (13) avant ou dans une zone de liaison (16) transversale de l'arceau de retournement (12) est fixé un enrouleur de ceinture (32) du dispositif à ceinture de sécurité (26).

7. Voiture de tourisme selon une ou plusieurs des revendications précédentes, caractérisée en ce que dans une zone de liaison (16) transversale, orientée horizontalement, de l'arceau de retournement (12), un dispositif de fixation (34) est prévu sur le côté tourné à l'opposé des passagers, pour la capote (5) pivotée vers l'arrière.

8. Voiture de tourisme selon une ou plusieurs des revendications précédentes, caractérisée en ce que l'arceau de retournement (12) présente, à peu près à hauteur de la fixation de l'enrouleur de ceinture (32), une deuxième liaison transversale tubulaire, qui relie entre elles les deux portions d'appui (13) avant.

9. Voiture de tourisme selon une ou plusieurs des revendications précédentes, caractérisée en ce qu'un coussin gonflable latéral peut être fixé sur la portion d'appui (13) avant.

10. Voiture de tourisme selon une ou plusieurs des revendications précédentes caractérisée en ce qu'un parevent peut être placé sur la zone de liaison (16) transversale de l'arceau de retournement (12).
